# EUROPÄISCHE PATENTANMELDUNG

(11) **EP 2 157 060 A1**
(43) Veröffentlichungstag der Anmeldung: **24.02.2010**
(21) Anmeldenummer: 08014922.2
(22) Anmeldetag: 22.08.2008
(51) Int. Cl.: C03B 37/07

(54) **Steuerungssystem für einen Glasfaserherstellungsprozess und Verfahren zum Betrieb eines solchen Steuerungssystems**

(71) Anmelder: Siemens Aktiengesellschaft, 80333 München (DE)
(72) Erfinder: Burgstahler, Ralph, 91056 Erlangen (DE); Goethals, Ludo, 67160 Wissembourg (FR); Klaus, Michael, 06886 Lutherstadt Wittenberg (DE); Saftig, Bernhard, 76764 Rheinzabern (DE)

(57) **Zusammenfassung**

Die Erfindung betrifft ein Steuerungssystem (30) für einen Glasfaserherstellungsprozess, mit zumindest folgenden Komponenten: einer Wicklersteuerung (20), einer Wicklerbewegungsführung (22)und einer Temperaturregelung (24), welches sich dadurch auszeichnet, dass das Steuerungssystem (30) die davon umfassten Komponenten örtlich zusammengefasst, insbesondere in einem Gerät (32) zusammengefasst, aufweist.

## Beschreibung

Die Erfindung betrifft ein Steuerungssystem für einen Glasfaserherstellungsprozess sowie ein Verfahren zum Betrieb eines solchen Steuerungssystems. Beim Glasfaserherstellungsprozess wird in einer Schmelzwanne Glasschmelze erzeugt und diese über Transportkanäle zu Formgebungsstationen transportiert. Ein nachgelagerter Wickler muss in Abhängigkeit von der Temperatur eine exakte Aufwickelgeschwindigkeit sicherstellen. Bekannte Lösungen für ein Steuerungssystem für einen derartigen Herstellungsprozess zeichnen sich durch eine klassische Trennung zwischen Prozesssteuerung einerseits und nachgelagerten Weiterverarbeitungsprozessen, zu denen auch das Wickeln gehört, andererseits aus. Beide Teile des Fertigungsprozesses werden durch autarke Steuerungssysteme geregelt, die unsynchronisiert zueinander arbeiten und über Feldbussysteme miteinander kommunizieren.

Bei den bekannten Steuerungssystemen können sich durch die verteilte Struktur Nachteile ergeben, z. B. aufgrund von Zeiten, die zur Kommunikation zwischen den einzelnen Steuerungseinheiten zur Übermittlung von Prozess- oder Vorgabewerten, benötigt werden und die sich als variable Totzeiten auf eine Regelgüte der durch einzelne Steuerungseinheiten ausgeführten Regelungen auswirken.

Eine Aufgabe der Erfindung besteht entsprechend darin, ein Steuerungssystem und ein Verfahren zu dessen Betrieb anzugeben, das die o. g. Nachteile vermeidet und/oder zumindest deren Auswirkungen reduziert.

Hinsichtlich des Steuerungssystems wird diese Aufgabe mit den Merkmalen des Anspruchs 1 gelöst. Dazu ist bei einem Steuerungssystem für einen Glasfaserherstellungsprozess mit zumindest folgenden Komponenten: einer Wicklersteuerung, einer Wicklerbewegungsführung und einer Temperaturführung vorgesehen, dass das Steuerungssystem die davon umfassten Komponenten örtlich zusammengefasst, insbesondere in einem Gerät zusammengefasst, aufweist. Soweit das Verfahren zum Betrieb eines derartigen Steuerungssystems betroffen ist, wird die o. g. Aufgabe dadurch gelöst, dass bei einem Steuerungssystem, bei dem zumindest zwei der davon umfassten Komponenten Regelungsalgorithmen ausführen, diese Regelungsalgorithmen durch das Steuerungssystem taktsynchron ausgeführt werden.

Der Vorteil der Erfindung besteht darin, dass durch die örtliche Zusammenfassung der von dem Steuerungssystem umfassten Komponenten Kommunikationsschnittstellen entfallen, die sich bisher in Form variabler, also nicht vorhersehbarer und damit nicht kompensierbarer Totzeiten z. B. auf eine Regelgüte der mit einzelnen Komponenten bewirkten Regelungen auswirken. Im Hinblick auf das Verfahren besteht der Vorteil darin, dass eine taktsynchrone Ausführung einer Mehrzahl von Regelungsalgorithmen ohne besonderen Aufwand sichergestellt werden kann, also z. B. ohne die bei einer dezentralen Realisierung des Steuerungssystems notwendige und aufwendige Synchronisation der einzelnen dezentralen Komponenten.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass bei einem Steuerungssystem, bei dem die davon umfassten Komponenten örtlich, insbesondere in einem Gerät, zusammengefasst sind, die Komponenten ohne zwischengeschaltete Feldbuskommunikationsstrecke wechselseitig kommunikativ erreichbar sind, d. h. eine Kommunikation erfolgt, z. B. über einen Hauptspeicher oder einen darin gebildeten Speicherbereich des Gerätes, mit dem das Steuerungssystem realisiert ist oder, wenn das Gerät einzelne Einheiten zur Implementierung der diversen Komponenten des Steuerungssystems umfasst, über einen von dem Gerät umfassten Bus, der üblicherweise mit einem sehr viel höheren Datendurchsatz betrieben werden kann als heute übliche Feldbuskommunikationsstrecken. In beiden Fällen reduzieren sich bisher unvermeidliche Totzeiten bei der Datenübertragung zwischen den einzelnen Komponenten des Steuerungssystems, wobei bei Verwendung des Speichers zum Datenaustausch ein verbleibender Zeitverlust nah bei Null und bei Verwendung z. B. eines Geräte- oder Rückwandbusses der verbleibende Zeitverlust um Größenordnungen kleiner als bei der Verwendung von Feldbuskommunikationsstrecken ist.

Hinsichtlich des Betriebsverfahrens ist gemäß einer bevorzugten Ausführungsform vorgesehen, dass das Steuerungssystem unter einer für alle davon umfassten Komponenten gleichen Zeitbasis Prozessgrößen des Glasfaserherstellungsprozesses erfasst und protokolliert. Mit der Zusammenfassung der von dem Steuerungssystem umfassten Komponenten entfallen bereits bisher sich ergebende variable Totzeiten, so dass insgesamt die Reproduzierbarkeit des Herstellungsprozesses deutlich erhöht wird. Mit der Protokollierung vorgegebener oder vorgebbarer Prozessgrößen unter einer für alle von dem Steuerungssystem umfassten Komponenten gleichen Zeitbasis ergibt sich mit der dann möglichen Darstellung solcher Größen im realen zeitlichen Zusammenhang eine Möglichkeit für Rückschlüsse auf eventuelle Verbesserungen. Eine solche Protokollierung erlaubt, wenn sie dauerhaft oder zumindest während eines vorgegebenen oder vorgebbaren Zeitraums durchgeführt wird, Trendaufzeichnungen, die ebenfalls in realem zeitlichem Zusammenhang gegenübergestellt werden können und insofern weitere Anhaltspunkte für eventuelle Prozessoptimierungen, z. B. im Hinblick auf Optimierungen der Dynamik des Herstellungsprozesses, eröffnen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Dabei ist das oder jedes Ausführungsbeispiel nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

Es zeigen
- FIG 1: einen Glasfaserherstellungsprozess mit einem grundsätzlich bekannten Steuerungssystem,
- FIG 2: den Glasfaserherstellungsprozess mit einem Steuerungssystem gemäß dem Ansatz der Erfindung und
- FIG 3: Details des Steuerungssystems gemäß FIG 2.

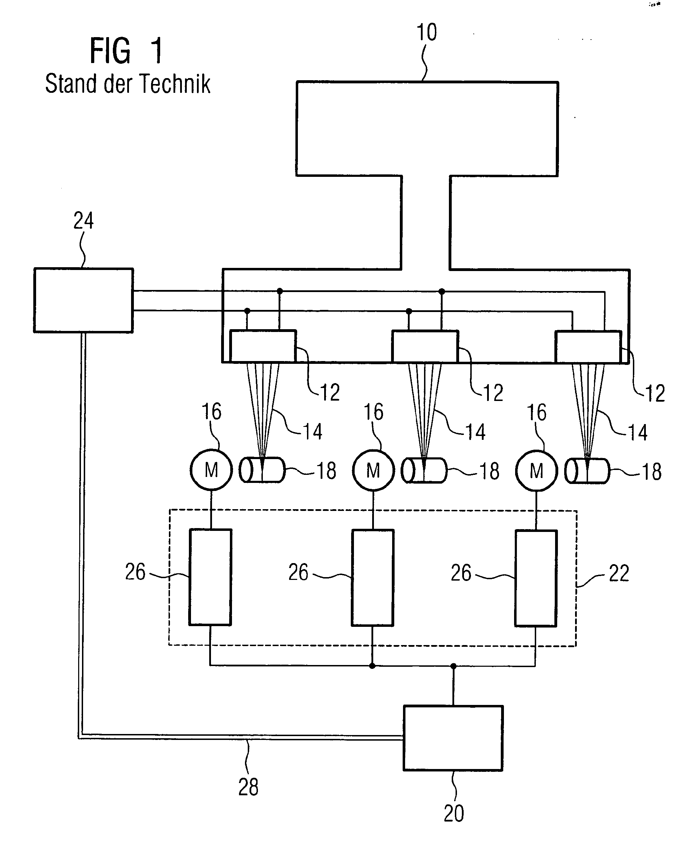

FIG 1 zeigt schematisch vereinfacht einen Glasfaserherstellungsprozess. In einer Schmelzwanne 10 wird Glasschmelze erzeugt und über Transportkanäle zu Formgebungsstationen 12 transportiert. Am Ausgang der Formgebungsstationen 12 ergeben sich Glasfasern 14, die mittels jeweils einer durch einen Motor 16 angetriebenen Wicklerstation 18 aufgewickelt werden.

Zur Steuerung des Glasfaserherstellungsprozesses ist ein Steuerungssystem vorgesehen, das zumindest eine Wicklersteuerung 20, eine Wicklerbewegungsführung 22 und eine Temperaturregelung 24 umfasst. Die Wicklerbewegungsführung 22 umfasst entsprechend der Vielzahl der Formgebungsstationen 12 für jeden Motor 16 einen Antrieb 26. Die Wicklersteuerung 20 wirkt auf die Wicklerbewegungsführung 22, also jeden Antrieb 26, und damit zumindest indirekt auf die Motoren 16. Die Wicklersteuerung 20 gibt im Betrieb den einzelnen Antrieben 26 z. B. einen Drehzahlsollwert vor, der durch diese mit einer davon umfassten Regelung unter Berücksichtigung externer Einflüsse soweit wie möglich konstant gehalten wird. Die Temperaturregelung 24 ist für die einzelnen Formgebungsstationen 12 vorgesehen und erfasst insoweit bei diesen Temperaturmesswerte und beeinflusst in Abhängigkeit von den aufgenommenen Messwerten und einem von der Temperaturregelung 24 umfassten Regelungsalgorithmus eine Energiezufuhr oder dergleichen zum Beeinflussen der Temperatur der einzelnen Formgebungsstationen 12.

Die Temperaturregelung 24 und die Wicklersteuerung 20 sind als verteilte, dezentrale Steuerungseinheiten ausgeführt und zwischen diesen Komponenten des Steuerungssystems besteht eine kommunikative Verbindung über einen Feldbus 28. Im Betrieb muss die Wicklersteuerung 20 mit der Temperaturregelung 24 koordiniert werden, derart, dass eine bei den Wicklerstationen 18 eingestellte Geschwindigkeit von der Temperatur der Formgebungsstationen 12, also Messwerten und dergleichen, wie sie der Temperaturregelung 24 zur Verfügung stehen, abhängt und umgekehrt. Zu diesem Zweck tauschen die beiden räumlich getrennten Komponenten des Steuerungssystems, nämlich Temperaturregelung 24 und Wicklersteuerung 20, Prozessdaten aus, so dass sich die erforderliche Abhängigkeit der Geschwindigkeit der Wicklerstationen 18 von der Temperatur der Formgebungsstationen 12 (oder umgekehrt) ergibt.

Die Übertragung solcher Daten über den Feldbus 28 erfordert eine zumindest mit der Signallaufzeit in dem als Feldbusleitung verwendeten Medium und mit dem für den jeweiligen Feldbus 28 definierten Protokoll korrelierte Zeit, die als Totzeit eine von der die Daten empfangende Komponente ausgeführten Reglung beeinflusst. Speziell wenn eine Zykluszeit, mit der die Wicklersteuerung 20 ein davon umfasstes Steuerungsprogramm zur Beeinflussung der Antriebe 26 ausführt, nicht exakt ein Vielfaches einer Zykluszeit für die Datenübermittlung über den Feldbus 28 entspricht, ergeben sich zusätzlich variierende Totzeiten, die die Regelung noch ungenauer machen. Gleiches gilt für einen Datenaustausch, wie er notwendig wird, wenn eine durch die Temperaturregelung 24 vorzugebende Temperatur der Formgebungsstationen 12 von einer der Wicklersteuerung 20 vorgegebenen Sollgeschwindigkeit der Wickelstationen 18 abhängt.

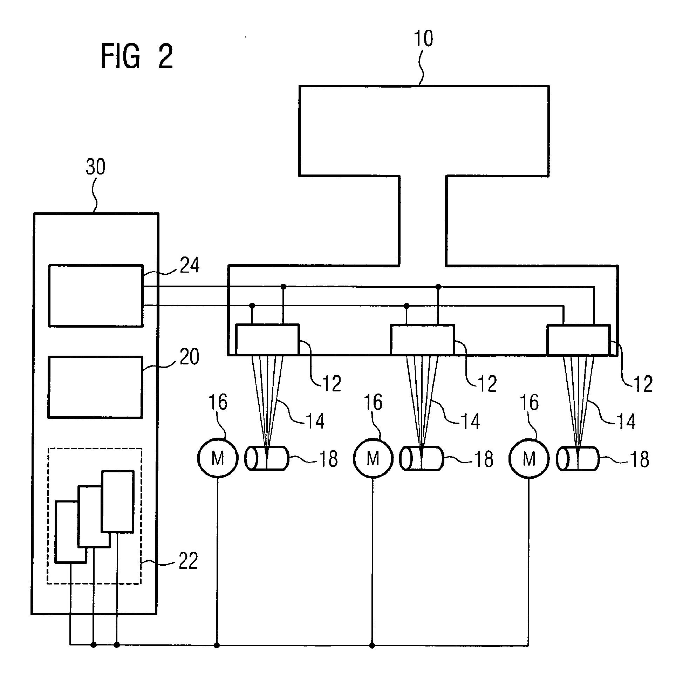

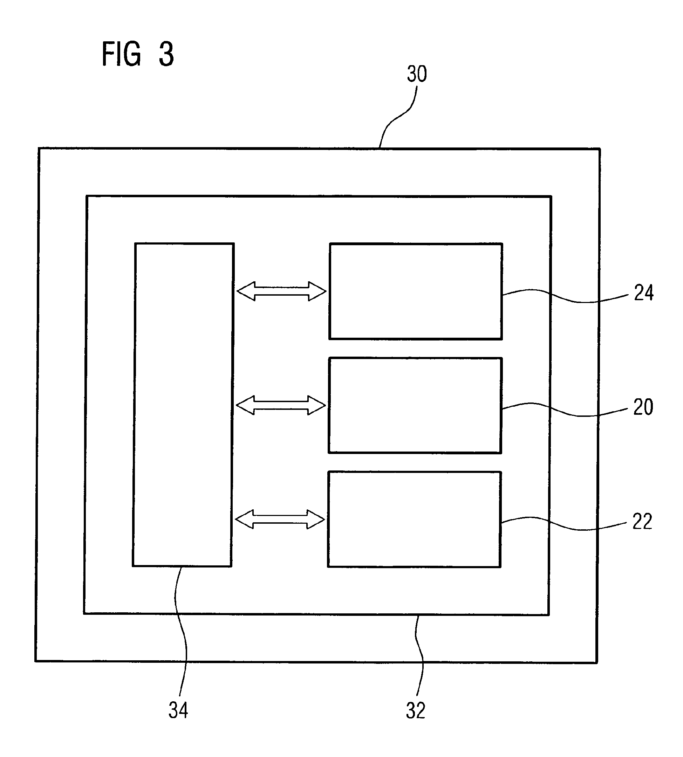

FIG 2 zeigt schematisch vereinfacht ein Steuerungssystem 30 gemäß dem Ansatz der Erfindung. Bei diesem Steuerungssystem 30 für den Glasfaserherstellungsprozess, das genau wie in FIG 1 die Komponenten Temperaturregelung 24, Wicklersteuerung 20 und Wicklerbewegungsführung 22 umfasst, sind diese Komponenten örtlich zusammengefasst, wobei in FIG 3 die Ausführungsform dargestellt ist, dass die Komponenten in einem Gerät 32 zusammengefasst sind.

Eine bisher erforderliche Feldbusleitung 28 (FIG 1) zur kommunikativen Verbindung von zumindest Temperaturregelung 24 und Wicklersteuerung 20 ist nicht mehr erforderlich. Ein zwischen den Komponenten des Steuerungssystems 30 erforderlicher Datenaustausch, kann, wie FIG 3 schematisch vereinfacht zeigt, z. B. über einen von dem als Steuerungssystem 30 fungierenden Gerät 32 umfassten Speicher 34, auf den alle vom Steuerungssystem 30 umfassten Komponenten, also Temperaturregelung 24, Wicklersteuerung 20 und Wicklerbewegungsführung 22 Zugriff haben, erfolgen.

Eine nicht dargestellte Alternative zum Datenaustausch zwischen den genannten und eventuell weiteren Komponenten des Steuerungssystems 30 besteht in der Verwendung eines von dem Gerät 32 umfassten Bus, z. B. einem Gerätebus, dessen Verwendung dann in Betracht kommt, wenn die einzelnen Komponenten des Steuerungssystems 30 auch innerhalb des Gerätes 32 als separate Funktionseinheiten, also z. B. separate Hardwareeinheiten, implementiert sind.

## Patentansprüche

1. Steuerungssystem (30) für einen Glasfaserherstellungsprozess, mit zumindest folgenden Komponenten: einer Wicklersteuerung (20), einer Wicklerbewegungsführung (22)und einer Temperaturregelung (24),
**dadurch gekennzeichnet, dass** das Steuerungssystem (30) die davon umfassten Komponenten örtlich zusammengefasst, insbesondere in einem Gerät (32) zusammengefasst, aufweist.

2. Steuerungssystem (30) nach Anspruch 1, wobei die davon umfassten Komponenten ohne zwischengeschaltete Feldbuskommunikationsstrecke wechselseitig kommunikativ erreichbar sind.

3. Verfahren zum Betrieb eines Steuerungssystems (30) nach einem der Ansprüche 1 oder 2, wobei zumindest zwei der von dem Steuerungssystem (30) umfassten Komponenten Regelungsalgorithmen ausführen und wobei die Regelungsalgorithmen durch das Steuerungssystem (30) taktsynchron ausgeführt werden.

4. Betriebsverfahren nach Anspruch 3, wobei das Steuerungssystem unter einer für alle davon umfassten Komponenten gleichen Zeitbasis Prozessgrößen des Glasfaserherstellungsprozess, insbesondere Temperatur, Motorströme, Drehzahlen, erfasst und protokolliert.
